# EUROPÄISCHE PATENTANMELDUNG

(11) **EP 1 316 761 A2**
(43) Veröffentlichungstag der Anmeldung: **04.06.2003**
(21) Anmeldenummer: 02450270.0
(22) Anmeldetag: 27.11.2002
(51) Int. Cl.: F24F 6/14

(54) **Vorrichtung zur Luftbefeuchtung**

(30) Priorität: 30.11.2001 AT 18682001
(71) Anmelder: Merlin Technology GmbH, 4910 Ried im Innkreis (AT)
(72) Erfinder: Reisinger, Johann, 4925 Pramet (AT)
(74) Vertreter: Hübscher, Helmut, Dipl.-Ing.

(57) **Zusammenfassung**

Es wird eine Vorrichtung zur Luftbefeuchtung mit einem ein Gebläse (6) aufnehmenden Gehäuse (1) mit vertikaler Achse, das eine axiale Luftansaugöffnung (8) und umfangsseitige Ausströmöffnungen (9) für die angesaugte Luft aufweist, und mit einer an eine Druckleitung für eine Sprühflüssigkeit anschließbaren, oberhalb der Ausströmöffnungen (9) vorgesehenen, ringförmigen Verteilerleitung (11) beschrieben, die über den Umfang des Gehäuses (1) verteilte Düsen (10) zum Zerstäuben der Sprühflüssigkeit zu einem Flüssigkeitsnebel trägt. Um vorteilhafte Konstruktionsbedingungen zu schaffen, wird vorgeschlagen, daß sich die Luftansaugöffnung (8) auf der Oberseite des Gehäuses (1) befindet und daß das Gehäuse (1) im Bereich der umfangsseitigen Ausströmöffnungen (9) eine Luftleiteinrichtung (5) für das als Radialgebläse ausgebildete Gebläse (6) aufnimmt.

## Beschreibung

Die Erfindung bezieht sich auf eine Vorrichtung zur Luftbefeuchtung mit einem ein Gebläse aufnehmenden Gehäuse mit vertikaler Achse, das eine axiale Luftansaugöffnung und umfangsseitige Ausströmöffnungen für die angesaugte Luft aufweist, und mit einer an eine Druckleitung für eine Sprühflüssigkeit anschließbaren, oberhalb der Ausströmöffnungen vorgesehenen, ringförmigen Verteilerleitung, die über den Umfang des Gehäuses verteilte Düsen zum Zerstäuben der Sprühflüssigkeit zu einem Flüssigkeitsnebel trägt.

Zur Luftbefeuchtung in Räumen ist es bekannt, eine Sprühflüssigkeit, im allgemeinen Wasser, zu einem Flüssigkeitsnebel zu zerstäuben, der mit Hilfe einer Luftströmung verteilt wird. Zu diesem Zweck wird unterhalb der Decke eines zu befeuchtenden Raumes ein Gehäuse mit einem Axialgebläse angeordnet, über das Raumluft durch eine untere Gehäuseöffnung angesaugt wird, um im Bereich eines oberen Gehäusedeckels umgelenkt und durch einen Ringspalt zwischen Gehäuse und Deckel radial ausgeblasen zu werden. Da auf dem Gehäusedeckel eine an eine Druckleitung für die Sprühflüssigkeit angeschlossene, ringförmige Verteilerleitung mit über den Ringumfang verteilten Düsen zum Zerstäuben der Sprühflüssigkeit angeordnet ist, wird der entstehende Flüssigkeitsnebel von der aus dem Raum angesaugten, radial aus dem Gehäuse ausströmenden Luft erfaßt und im Raum verteilt. Die Kühlung der mit dem Flüssigkeitsnebel beladenen Luft bedingt eine Sinkströmung, die in Abhängigkeit von der Ausströmgeschwindigkeit der Luft aus dem Gehäuse die Gefahr mit sich bringt, daß ein Teil der ausgeblasenen Luft in den Ansaugbereich des Gebläses gelangt, was aufgrund des sich bildenden Strömungskurzschlusses zu einer Überfeuchtung der ausgeblasenen Luft führt. Als Folge einer solchen Überfeuchtung bestimmter Raumluftbereiche muß mit Feuchtigkeitsniederschlägen gerechnet werden. Dazu kommt, daß die eingesetzten Axialgebläse eine vergleichsweise große Bauhöhe bedingen und die Luftumlenkung im Bereich des Gehäusedeckels Strömungsverluste mit sich bringt.

Der Erfindung liegt somit die Aufgabe zugrunde, eine Vorrichtung zur Luftbefeuchtung der eingangs geschilderten Art so auszugestalten, daß der durch das Zerstäuben der Sprühflüssigkeit entstehende Flüssigkeitsnebel vorteilhaft durch die aus dem Gehäuse ausgeblasene Luft im Raum verteilt werden kann, ohne eine örtliche Überfeuchtung durch eine sich über das Gebläse kurzschließende Teilströmung der ausgeblasenen Luft befürchten zu müssen. Außerdem sollen einfache Konstruktionsverhältnisse bei einer niedrigen Bauhöhe sichergestellt werden.

Die Erfindung löst die gestellte Aufgabe dadurch, daß sich die Luftansaugöffnung auf der Oberseite des Gehäuses befindet und daß das Gehäuse im Bereich der umfangsseitigen Ausströmöffnungen eine Luftleiteinrichtung für das als Radialgebläse ausgebildete Gebläse aufnimmt.

Da zufolge dieser Maßnahmen die Raumluft von oben in das Gehäuse angesaugt wird, während sich der radial aus dem Gehäuse ausgeblasenen Luft eine Sinkbewegung aufgrund der Abkühlung durch die zerstäubte Sprühflüssigkeit überlagert, kann sich selbst bei niedriger Ausströmgeschwindigkeit der ausgeblasenen Luft keine Kurzluftströmung über das Gebläse ausbilden, so daß eine örtliche Überfeuchtung der mit dem Flüssigkeitsnebel beladenen Luft ausgeschlossen werden kann. Dazu kommt, daß durch die Luftleiteinrichtung im Bereich der umfangsseitigen Ausströmöffnungen des Gehäuses im Zusammenwirken mit dem Einsatz eines Radialgebläses vorteilhaft auf die Verteilung der Luftströmung in Abhängigkeit von der Düsenanordnung Einfluß genommen werden kann, was zu einer gleichmäßigen und wirkungsvollen Luftbefeuchtung führt. In diesem Zusammenhang ist außerdem zu bedenken, daß die oberhalb des Gehäuses angesaugte Luft aufgrund des üblichen Temperaturanstieges eine höhere Temperatur als die Luft unterhalb des Gebläses aufweist, so daß das Verdampfen des sich bildenden Flüssigkeitsnebels unterstützt wird. Die Wärmeabfuhr aus den oberen Raumbereichen bringt außerdem eine gleichmäßigere Temperaturverteilung innerhalb des Raumes mit sich. Schließlich erlaubt der Einsatz eines Radialgebläses eine vergleichsweise niedrige Bauhöhe, weil sich gesonderte Umlenkeinrichtungen für die axial angesaugte Luftströmung erübrigen und die damit verbundenen Strömungsverluste vermieden werden.

Um besonders einfache Konstruktionsverhältnisse zu schaffen, kann das Gehäuse aus einer Boden- und einer Deckenschale sowie aus zwischen den mit axialem Abstand voneinander angeordneten Schalen befestigten, über den Umfang verteilten, radialen Leitstegen der Luftleiteinrichtung bestehen. Die radialen Leitstege können somit zur Verbindung der Boden- und der Deckenschale herangezogen werden und bilden dann zwischen Boden- und Deckenschale Abstandhalter. Werden die Boden- und die Deckenschale voneinander unabhängig mit den Leitstegen verbunden, so kann durch ein bloßes Abnehmen der Deckenschale eine vorteilhafte Zugänglichkeit zum Radialgebläse und den gegebenenfalls mit dem Radialgebläse angeordneten Steuer- und Antriebseinrichtungen geschaffen werden. Aufgrund des Einsatzes eines Radialgebläses kann nämlich auch eine Pumpe für die Sprühflüssigkeit im Gehäuse untergebracht werden, ohne eine übermäßige Bauhöhe in Kauf nehmen zu müssen, so daß solche Belüfter dann lediglich an eine Versorgung für die Sprühflüssigkeit und an ein Stromnetz anzuschließen sind.

Damit ein Zugriff zum Rotor des Radialgebläses durch die umfangsseitigen Ausströmöffnungen im Gehäuse unterbunden werden kann, müssen entsprechende Schutzmaßnahmen getroffen werden. Zu diesem Zweck können die radialen Leitstege als Träger für in Umfangsrichtung verlaufende Schutzlamellen ausgebildet sein, was einfache Konstruktionsvoraussetzungen schafft, ohne die Abnahme der Deckenschale vom übrigen Gehäuse zu gefährden.

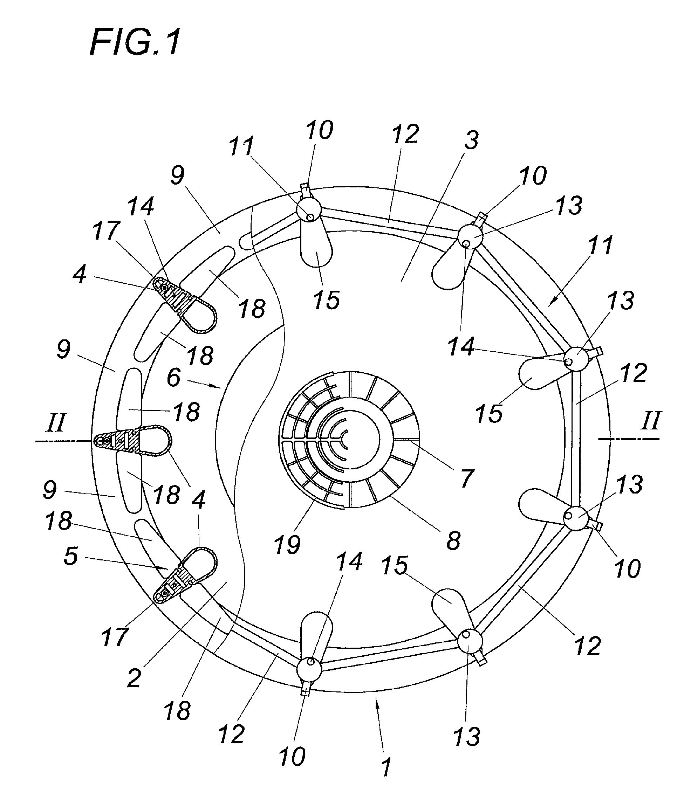

In der Zeichnung ist der Erfindungsgegenstand beispielsweise dargestellt. Es zeigen
- Fig.1: eine erfindungsgemäße Vorrichtung zur Luftbefeuchtung in einer teilweise aufgerissenen Draufsicht und
- Fig. 2: diese Vorrichtung in einem Schnitt nach der Linie II-II der Fig. 1 in einem größeren Maßstab.

Die dargestellte Vorrichtung zur Luftbefeuchtung weist gemäß dem Ausführungsbeispiel ein Gehäuse 1 auf, das aus einer Bodenschale 2 und einer mit axialem Abstand von der Bodenschale 2 angeordneten Deckenschale 3 besteht. Die beiden Schalen 2 und 3 werden durch über den Umfang verteilte, radiale Leitstege 4 einer Luftleiteinrichtung 5 verbunden. Koaxial zur Luftleiteinrichtung 5 ist ein als Radialgebläse ausgebildetes Gebläse 6 in das Gehäuse 1 eingesetzt. Die über den Rotor 7 des Radialgebläses durch eine Luftansaugöffnung 8 in der Deckenschale 3 angesaugte Raumluft wird radial durch die Ausströmöffnungen 9 zwischen den Schalen 2 und 3 sowie den Leitstegen 4 ausgeblasen, wobei die Leitstege 4 der Luftleiteinrichtung 5 eine Richtwirkung auf die austretenden Luftströmungen ausüben. Über die Luftleiteinrichtung 5 können daher die durch die Ausströmöffnungen 9 austretenden Luftströme gegenüber den zur Zerstäubung der Sprühflüssigkeit vorgesehenen Düsen 10 ausgerichtet werden, was eine vorteilhafte Voraussetzung zur gleichmäßigen Verteilung des entstehenden Flüssigkeitsnebels über die ausströmende Blasluft schafft.

Die Düsen 10 sind entlang einer ringförmigen Verteilerleitung 11 angeordnet, die in herkömmlicher Weise an eine Druckleitung für die Sprühflüssigkeit angeschlossen ist. Die Verteilerleitung 11 setzt sich aus einzelnen Rohrstücken 12 zusammen, die miteinander durch Zwischenstücke 13 verbunden sind. Zum Anschluß einerseits der Rohrstücke 12 und anderseits der Düsen 10 sind die kreiszylindrisch ausgebildeten Zwischenstücke 13 mit Anschlußbohrungen versehen, die sich in der Achse der Zwischenstücke 13 schneiden und in die die Rohrstücke 12 bzw. die Düsen 10 eingeschraubt werden. Diese Konstruktion hat den Vorteil, daß die Rohrstücke unabhängig von den konstruktiven Vorgaben zum Anschluß der Düsen 10 mit einem vergleichsweise kleinen Durchmesser ausgebildet werden können, was zu einer selbständigen Entlüftung der Verteilerleitung 11 durch die Sprühflüssigkeit führt. Die Zwischenstücke 13 können außerdem vorteilhaft zur Befestigung der Verteilerleitung 11 auf der Deckenschale 3 verwendet werden. Zu diesem Zweck weisen die Zwischenstücke 13 Durchtrittslöcher für Befestigungsschrauben 14 auf.

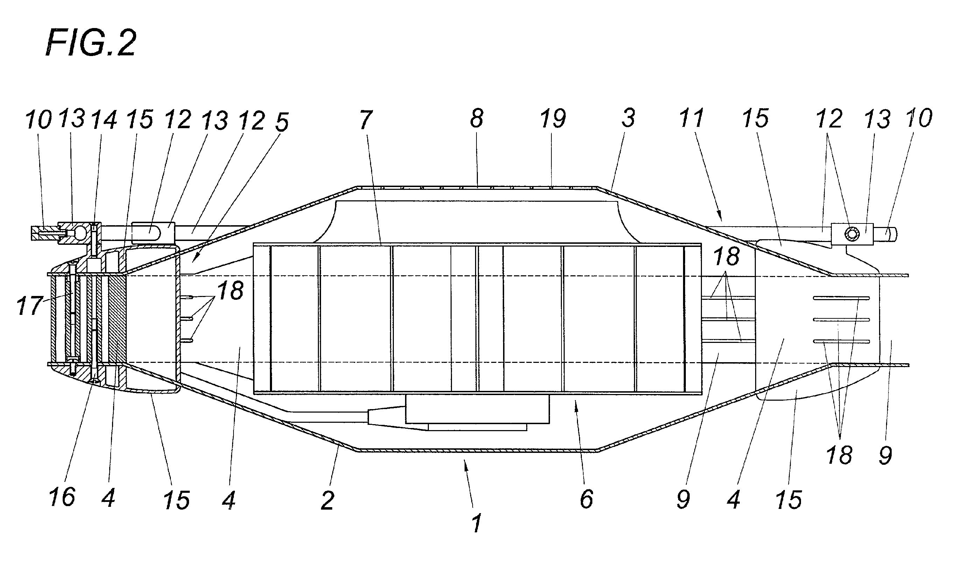

Wie der Fig. 2 entnommen werden kann, sind die Schalen 2 und 3 des Gehäuses 1 je für sich mit den vorzugsweise aus Kunststoffprofilen bestehenden Leitstegen 4 verbunden, und zwar über äußere Abdeckkappen 15, die durch die Schalen 2 und 3 hindurch mittels Schrauben 16 und 17 verschraubt werden. Aufgrund dieser Maßnahme kann durch Lösen der Schrauben 16 oder 17 die Bodenschale 2 oder die Deckenschale 3 vom übrigen Gehäuse 1 abgenommen werden, was einen einfachen Zutritt zum Gebläse 6 und der übrigen im Gehäuse 1 untergebrachten Steuer- und Antriebseinrichtungen ermöglicht.

Damit der Zugriff zum Rotor 7 des Gebläses 6 durch die Ausströmöffnungen 9 hindurch unterbunden wird, tragen die Leitstege 4 in Umfangsrichtung verlaufende Schutzlamellen 18, die schnappverschlußartig in entsprechende Rastausnehmungen in den Leitstegen 4 eingreifen. Da die Schutzlamellen 18 somit weder mit der Bodenschale 2 noch mit der Deckenschale 3 verbunden sind, können diese Schutzlamellen 18 auch nicht das wahlweise Abnehmen dieser Schalen 2 bzw. 3 behindern. Es braucht wohl nicht besonders hervorgehoben zu werden, daß auch die Luftansaugöffnung 8 mit einem entsprechenden Schutzgitter 19 versehen werden muß.

Da die Raumluft von oben durch die Ansaugöffnung 8 über den Rotor 7 des Gebläses 6 angesaugt wird, die über die Luftleiteinrichtung 5 radial ausgeblasene Luft jedoch einer Sinkbewegung aufgrund der Abkühlung durch die mit Hilfe der Düsen zerstäubten Sprühflüssigkeit unterworfen wird, wird die mit dem entstehenden Flüssigkeitsnebel beladene Luft unabhängig von der Ausströmgeschwindigkeit aus dem Gehäuse 1 aus dem Ansaugbereich des Gebläses 6 wegbewegt, was eine Überfeuchtung durch sich über das Gebläse 6 kurzschließende Teilluftströme ausschließt.

## Patentansprüche

1. Vorrichtung zur Luftbefeuchtung mit einem ein Gebläse (6) aufnehmenden Gehäuse (1) mit vertikaler Achse, das eine axiale Luftansaugöffnung (8) und umfangsseitige Ausströmöffnungen (9) für die angesaugte Luft aufweist, und mit einer an eine Druckleitung für eine Sprühflüssigkeit anschließbaren, oberhalb der Ausströmöffnungen (9) vorgesehenen, ringförmigen Verteilerleitung (11), die über den Umfang des Gehäuses (1) verteilte Düsen (10) zum Zerstäuben der Sprühflüssigkeit zu einem Flüssigkeitsnebel trägt, **dadurch gekennzeichnet, daß** sich die Luftansaugöffnung (8) auf der Oberseite des Gehäuses (1) befindet und daß das Gehäuse (1) im Bereich der umfangsseitigen Ausströmöffnungen (9) eine Luftleiteinrichtung (5) für das als Radialgebläse ausgebildete Gebläse (6) aufnimmt.

2. Vorrichtung nach Anspruch 1, **dadurch gekennzeichnet, daß** das Gehäuse (1) aus einer Boden- und einer Deckenschale (2, 3) und aus zwischen den mit axialem Abstand voneinander angeordneten Schalen (2, 3) befestigten, über den Umfang verteilten, radialen Leitstegen (4) der Luftleiteinrichtung (5) besteht.

3. Vorrichtung nach Anspruch 2, **dadurch gekennzeichnet, daß** die radialen Leitstege (4) als Träger für in Umfangsrichtung verlaufende Schutzlamellen (18) ausgebildet sind.
